(19) **Europäisches Patentamt / European Patent Office / Office européen des brevets**

(11) **EP 2 738 217 A1**

(12) # EUROPEAN PATENT APPLICATION
published in accordance with Art. 153(4) EPC

(43) Date of publication:
**04.06.2014 Bulletin 2014/23**

(51) Int Cl.:
*C08L 27/08* (2006.01)     *C08J 5/00* (2006.01)
*C08K 3/00* (2006.01)     *C08K 5/00* (2006.01)

(21) Application number: **11869879.4**

(22) Date of filing: **27.07.2011**

(86) International application number:
**PCT/JP2011/067137**

(87) International publication number:
**WO 2013/014770 (31.01.2013 Gazette 2013/05)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(71) Applicant: **Asahi Kasei Chemicals Corporation Tokyo 101-8101 (JP)**

(72) Inventors:
• **IZUMIYAMA, Yuki**
  **Tokyo 101-8101 (JP)**

• **KATANO, Chikako**
  **Tokyo 101-8101 (JP)**

(74) Representative: **O'Brien, Simon Warwick**
  **D Young & Co LLP**
  **120 Holborn**
  **London EC1N 2DY (GB)**

(54) **VINYLIDENE CHLORIDE-BASED RESIN COMPOSITION AND MANUFACTURING METHOD THEREOF, AND VINYLIDENE CHLORIDE-BASED RESIN MOLDED PRODUCT**

(57)     [Problem to be Solved]

It is an object of the present invention to provide a novel vinylidene chloride-based resin composition enabling continuous extrusion molding over a long period of time and having excellent thermal stability, and a manufacturing method thereof, or the like. It is another object of the present invention to provide a vinylidene chloride-based resin molded product or the like having not only excellent thermal stability and productivity but also excellent barrier property and transparency.

[Solution]

A vinylidene chloride-based resin composition comprises: particles (A) which are solid at room temperature; a plasticizer (B) which is liquid at room temperature; and a vinylidene chloride-based copolymer, wherein, in an area of 0.4 $cm^2$ observed with a transmission optical microscope, a ratio of the particles (A) which have a projected area of 1000 $\mu m^2$ or more and 3000 $\mu m^2$ or less to the particles (A) which have a projected area of 10 $\mu m^2$ or more and 3000 $\mu m^2$ or less is 20% or less; and a ratio of the particles (A) which have a projected area of 10 $\mu m^2$ or more and less than 100 $\mu m^2$ to the particles (A) which have a projected area of 10 $\mu m^2$ or more and 3000 $\mu m^2$ or less is 40% or more.

Fig.1

## Description

Technical Field

The present invention relates to a novel vinylidene chloride-based resin composition enabling continuous extrusion molding over a long period of time and having excellent thermal stability, and a manufacturing method thereof. Also, the present invention relates to a vinylidene chloride-based resin molded product melt-molded by using the vinylidene chloride-based resin composition and having excellent barrier property and transparency.

Background Art

A vinylidene chloride-based resin composition containing a vinylidene chloride-based copolymer and an additive such as an adequate amount of plasticizer or stabilizer has been generally known. Because a molded product obtained by subjecting the vinylidene chloride-based resin composition to melt-molding processing (vinylidene chloride-based resin molded product) particularly has excellent oxygen barrier property, moisture-proof property, transparency, chemical resistance, oil resistance or the like, the molded product is used in wide variety of applications such as food packaging and medicine packaging.

However, in the present circumstances, only a tiny amount of liquid additive having a plasticizing effect can be added to the vinylidene chloride-based resin molded product in order to keep the prominent barrier property. Because the added liquid additive is at risk of being influenced by preservation environment and a content to be filled (object to be packed), and thereby being extracted or transitioning when the vinylidene chloride-based copolymer is molded to a packaging material such as a film or a container, it is also considered that the amount to be added is preferably tiny in terms of food sanitation. According to these situations, the conventional vinylidene chloride-based resin composition and vinylidene chloride-based resin molded product have very poor thermal stability during melt-molding, for example, during extrusion film-forming. That is, in order to maintain high barrier property and suppress the transitioning of the additive to the food, thermal stability and productivity are sacrificed.

Then, there have been attempts to blend an inorganic substance powder having a heat stabilization effect with the vinylidene chloride-based copolymer in order to realize high barrier property, low transitivity to food, and high thermal stability. Specifically, Patent Literatures 1 and 2 describe magnesium oxide (MgO) as an inorganic substance powder blended with a vinylidene chloride-based copolymer. Patent Literature 3 describes magnesium hydroxide ($Mg(OH)_2$). The blending of these inorganic substance powders (thermostabilizers) is useful for protecting the vinylidene chloride-based copolymer which is apt to be pyrolyzed and thermally deteriorated from heating during melt-extruding. Usually, 0.1% by weight or more and 2.0% by weight or less of an inorganic substance powder based on the vinylidene chloride-based copolymer is blended.

Citation List

Patent Literature

    Patent Literature 1: Japanese Patent Publication No. 50-38651
    Patent Literature 2: Japanese Patent Laid-Open No. 9-52963
    Patent Literature 3: National Publication of International Patent Application No. 4-500829

Summary of Invention

Technical Problem

However, the resin composition products described in Patent Literatures 1 to 3 still have insufficient thermal stability, and furthermore, it is difficult to perform continuous extrusion molding over a long period of time while maintaining a sufficient barrier level.

It is considered that both high thermal stability and barrier performance of a molded product can be achieved by increasing the blending amount of a thermostabilizer which is solid at room temperature (25°C). However, this generates the aggregation and segregation of the thermostabilizer when the thermostabilizer is mixed with the vinylidene chloride-based copolymer, and thereby the original heat stabilization effect of the added thermostabilizer is not sufficiently exhibited. Furthermore, the solid-like aggregate of the thermostabilizer exists in the molded product after processing, and thereby scattering occurs in the transmitted light of the molded product. Disadvantageously, this remarkably degrades the transparency of the molded product, particularly the transparency after heat treatments such as boil and retort.

The present invention has been made in view of the above-mentioned problems, and it is an object of the present invention to provide a novel vinylidene chloride-based resin composition enabling continuous extrusion molding over a long period of time and having excellent thermal stability, and a manufacturing method thereof. It is another object of the present invention to provide a vinylidene chloride-based resin molded product melt-molded by using the vinylidene chloride-based resin composition and having excellent barrier property and transparency.

Solution to Problem

The present inventors have conducted earnest studies. As a result, the present inventors have found that a vinylidene chloride-based resin composition wherein particles (A) which are solid at room temperature and have a specific distribution state can solve the above-mentioned problems. The present invention was accomplished based on this finding.

That is, the present invention provides the following (1) to (7).

(1) A vinylidene chloride-based resin composition comprising:

particles (A) which are solid at room temperature;
a plasticizer (B) which is liquid at room temperature; and
a vinylidene chloride-based copolymer,
wherein, in an area of 0.4 cm$^2$ observed with a transmission optical microscope, a ratio of the particles (A) which have a projected area of 1000 $\mu$m$^2$ or more and 3000 $\mu$m$^2$ or less to the particles (A) which have a projected area of 10 $\mu$m$^2$ or more and 3000 $\mu$m$^2$ or less is 20% or less; and a ratio of the particles (A) which have a projected area of 10 $\mu$m$^2$ or more and less than 100 $\mu$m$^2$ to the particles (A) which have a projected area of 10 $\mu$m$^2$ or more and 3000 $\mu$m$^2$ or less is 40% or more.

(2) The vinylidene chloride-based resin composition according to (1), wherein the particles (A) are selected from oxides or hydroxides of metals or elements of the 14th group of the periodic table.
(3) The vinylidene chloride-based resin composition according to (1) or (2), wherein the plasticizer (B) has a viscosity of 2.5 Pa·s or more and 6 Pa·s or less, as measured at 25°C with an E type viscometer.
(4) The vinylidene chloride-based resin composition according to any one of (1) to (3), wherein a film after retort treatment has a HAZE value as transparency of 5% or less in terms of a film having a thickness of 15 $\mu$m.
(5) A method for manufacturing a vinylidene chloride-based resin composition, the method comprising the step of:

blending a paste-like additive, which is obtained by preparing particles (A) which are solid at room temperature in the presence of a plasticizer (B) which is liquid at room temperature and comprises 30% by weight or more and 60% by weight or less of the particles (A), with a vinylidene chloride-based copolymer,
wherein, in an area of 0.4 cm$^2$ observed with a transmission optical microscope, a ratio of the particles (A) which have a projected area of 1000 $\mu$m$^2$ or more and 3000 $\mu$m$^2$ or less to the particles (A) which have a projected area of 10 $\mu$m$^2$ or more and 3000 $\mu$m$^2$ or less is 20% or less; and a ratio of the particles (A) which have a projected area of 10 $\mu$m$^2$ or more and less than 100 $\mu$m$^2$ to the particles (A) which have a projected area of 10 $\mu$m$^2$ or more and 3000 $\mu$m$^2$ or less is 40% or more.

(6) A vinylidene chloride-based resin molded product comprising at least one layer having a thickness of 1 $\mu$m or more and 1000 $\mu$m or less, the layer prepared by melt-molding the vinylidene chloride-based resin composition according to any one of (1) to (4).
(7) The vinylidene chloride-based resin composition according to (1), comprising:

0.10 to 0.85% by weight of particles (A) which are solid at room temperature;
0.10 to 2.00% by weight of a plasticizer (B) which is liquid at room temperature, and
a vinylidene chloride-based copolymer,
wherein the vinylidene chloride-based resin composition is obtained by mixing at least a paste-like additive, which is obtained by mixing the particles (A) which are solid at room temperature in the presence of the plasticizer (B) which is liquid at room temperature, with the vinylidene chloride-based copolymer.

Advantageous Effects of Invention

The present invention can realize a vinylidene chloride-based resin composition having excellent thermal stability and high productivity. Thereby, the present invention can simply realize a vinylidene chloride-based resin molded product having excellent barrier property and transparency at a low cost.

Brief Description of Drawings

[Figure 1] Figure 1 is a schematic view showing a manufacturing apparatus for melt-molding a vinylidene chloride-based resin molded product.

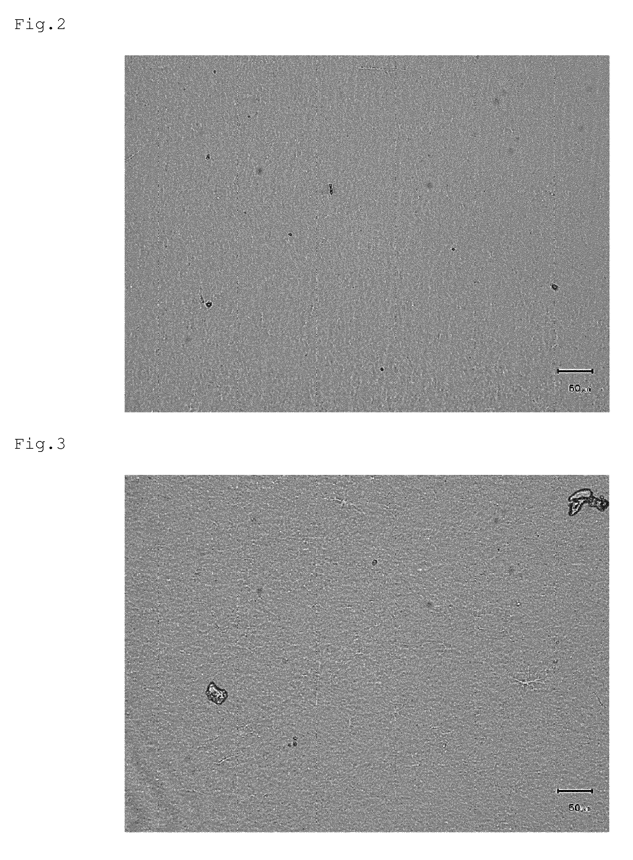

[Figure 2] Figure 2 shows an observation photograph of a film of Example 3.
[Figure 3] Figure 3 shows an observation photograph of a film of Comparative Example 4.

Description of Embodiments

Hereinafter, an embodiment of the present invention will be specifically described. The following embodiment is exemplified to describe the present invention. The present invention is not limited only to the embodiment.

A vinylidene chloride-based resin composition of the present embodiment contains particles (A) which are solid at room temperature, a plasticizer (B) which is liquid at room temperature, and a vinylidene chloride-based copolymer.

In the present embodiment, the vinylidene chloride-based copolymer means a copolymer of vinylidene chloride as a primarily monomer component and an unsaturated monomer having copolymerizability therewith. The vinylidene chloride-based copolymer preferably contains 50 to 98% by weight of vinylidene chloride based on the total amount of the copolymer in a copolymerization ratio.

Specific examples of the unsaturated monomer include, but are not particularly limited to, vinyl chloride or acrylic esters such as methyl acrylate and butyl acrylate, methacrylate esters such as methyl methacrylate and butyl methacrylate, acrylonitrile, isobutylene, and vinyl acetate. The unsaturated monomers may be used alone or in combination of two or more.

The weight average molecular weight (Mw) of the vinylidene chloride-based copolymer is not particularly limited, and is preferably 50,000 to 150,000, and more preferably 60,000 to 130,000. A strength capable of withstanding film-forming stretching during melt-molding can be easily realized by setting the weight average molecular weight (Mw) to 50,000 or more. On the other hand, thermal stability during melt-molding can be improved by setting the weight average molecular weight (Mw) to 150,000 or less and combining the vinylidene chloride-based copolymer in which the content of the above-mentioned unsaturated monomer is adjusted, the particles (A) which are solid at room temperature, and the plasticizer (B) which is liquid at room temperature. In this specification, the weight average molecular weight (Mw) of the vinylidene chloride-based copolymer is taken as a value obtained by a gel permeation chromatography method (GPC method) using polystyrene as a standard.

Specific examples of the particles (A) which are solid at room temperature (25°C) include, but are not particularly limited to, inorganic minerals such as silica ($SiO_2$, melting point; about 1700°C), talc ($Mg_3Si_4O_{10}(OH)_2$, melting point; 1500°C or more), and mica (melting point; 1250°C), organic compounds such as anthraquinone (melting point; 286°C), metal simple substances such as aluminium (Al, melting point; 660°C), metal oxides represented by magnesium oxide (MgO, melting point; 2852°C), calcium oxide (CaO, melting point; 2572°C), titanium dioxide ($TiO_2$, melting point; 1870°C), aluminium oxide ($Al_2O_3$, melting point; 2020°C), sodium oxide (NaOH, melting point; 400°C), lead oxide (PbO, melting point; 888°C) or the like, metal sulfides represented by barium sulfate ($BaSO_4$, melting point; 1600°C), aluminium sulfate ($Al_2(SO_4)_3$, melting point; 770°C), magnesium sulfate ($MgSO_4$, melting point; 1185°C), sodium sulfate ($Na_2SO_4$, melting point; 884°C) or the like, metal hydroxides represented by magnesium hydroxide ($Mg(OH)_2$, melting point; 350°C), calcium hydroxide ($Ca(OH)_2$, melting point; 580°C), aluminium hydroxide ($Al(OH)_3$, melting point; 300°C), potassium hydroxide (KOH, melting point; 360°C) or the like, metal carbonates represented by magnesium carbonate ($MgCO_3$, melting point; 350°C), potassium carbonate ($K_2CO_3$, melting point; 891°C), calcium carbonate ($CaCO_3$, melting point; 825°C) or the like, metal nitrates represented by potassium nitrate ($KNO_3$, melting point; 333°C), calcium nitrate ($Ca(NO_3)_2$, melting point; 561°C), sodium nitrate ($NaNO_3$, melting point; 308°C) or the like, or inorganic compounds such as hydrotalcite of a mixture thereof ($M^1_{8-x}M^2_x(OH)_{16}CO_2 \cdot nH_2O$, $M^1 = Mg^{2+}$, $Fe^{2+}$, $Zn^{2+}$, $Ca^{2+}$, $Li^{2+}$, $Ni^{2+}$, $Co^{2+}$, $Cu^{2+}$, $M^2 = Al^{3+}$, $Fe^{3+}$, $Mn^{3+}$, $2 \leq x \leq 5$, melting point; about 350°C). Among them, the particles (A) which are solid at room temperature are preferably an inorganic compound selected from oxides of metals or elements of the 14th group of the periodic table represented by silica, magnesium oxide, calcium oxide, titanium dioxide, aluminium oxide, sodium oxide, lead oxide or the like, and hydroxides of metals or elements of the 14th group of the periodic table represented by magnesium hydroxide, calcium hydroxide, aluminium hydroxide, potassium hydroxide or the like, hydrotalcite as a mixture thereof, or oxides or hydroxides of metals or elements of the 14th group of the periodic table. From the viewpoint of gas barrier property, the particles (A) which are solid at room temperature are preferably solid under a retort condition (120°C or more) as well as at room temperature (25°C).

The content ratio of the particles (A) which are solid at room temperature is not particularly limited, and preferably 0.10 to 0.85% by weight in the vinylidene chloride-based resin composition of the present embodiment. The thermal stability during melt-molding can be improved by setting the content ratio of the particles (A) which are solid at room temperature to 0.10% by weight or more and combining the vinylidene chloride-based copolymer in which the content of the above-mentioned unsaturated monomer and the weight average molecular weight (Mw) are adjusted with the plasticizer (B) which is liquid at room temperature. The transparency of a vinylidene chloride-based resin molded product obtained by melt-molding, for example, a film can be improved by setting the content ratio of the particles (A) which are solid at room temperature to 0.85% by weight or less.

Specific examples of the plasticizer (B) which is liquid at room temperature include, but are not particularly limited to, plasticizers such as mineral oil (MO), acetyltributyl citrate (ATBC), dibutyl sebacate, diisobutyl adipate, and epoxidized octyl stearate, epoxy compounds such as epoxidized linseed oil (ELO), epoxidized soybean oil (ESO), epoxidized wood oil, epoxidized castor oil, epoxidized palm oil, epoxidized polybutadiene, and bisphenol A diglycidyl ether (BADGE), or a mixture thereof. Among them, the epoxy compounds such as epoxidized linseed oil (ELO), epoxidized soybean oil (ESO), epoxidized wood oil, epoxidized castor oil, epoxidized palm oil, epoxidized polybutadiene, and epoxidized octyl stearate are preferable.

The content ratio of the plasticizer (B) which is liquid at room temperature is not particularly limited, and preferably 0.10 to 2.00% by weight in the vinylidene chloride-based resin composition of the present embodiment. The thermal stability during melt-molding can be improved by setting the content ratio of the plasticizer (B) which is liquid at room temperature to 0.10% by weight or more and combining the vinylidene chloride-based copolymer in which the content of the above-mentioned unsaturated monomer and the weight average molecular weight (Mw) are adjusted with the particles (A) which are solid at room temperature. The barrier property of the vinylidene chloride-based resin molded product obtained by melt-molding, for example, the film can be improved by setting the content ratio of the plasticizer (B) which is liquid at room temperature to 2.00% by weight or less and combining the vinylidene chloride-based copolymer in which the content of the above-mentioned unsaturated monomer and the weight average molecular weight (Mw) are adjusted.

The vinylidene chloride-based resin composition of the present embodiment may contain other resins (including a polymer and a copolymer), and various additives such as an antioxidant agent, a thermostabilizer, a lubricant, a pearskin agent, and a pigment, if needed. Specific examples of the additives include, but are not particularly limited to, antioxidant agents such as vitamin E, butylhydroxytoluene (BHT), thiopropionic acid alkyl ester, and sodium pyrophosphate, chelating agents such as ethylenediaminetetraacetic acid (EDTA) and ethylenediamine tetraacetic acid disodium salt (EDTA-2Na), various lubricants such as silica and talc, and various colorants such as a pearskin agent, a pigment, and a dye.

In the vinylidene chloride-based resin composition of the present embodiment, a ratio of the particles (A) which are solid at room temperature and have a projected area of 1000 $\mu m^2$ or more and 3000 $\mu m^2$ or less to the particles (A) which are solid at room temperature and have a projected area of 10 $\mu m^2$ or more and 3000 $\mu m^2$ or less needs to be 20% or less, and a ratio of the particles (A) which are solid at room temperature and have a projected area of 10 $\mu m^2$ or more and less than 100 $\mu m^2$ needs to be 40% or more, in an area of 0.4 cm$^2$ observed with a transmission optical microscope.

In the vinylidene chloride-based resin composition of the present embodiment, the particles (A) which are solid at room temperature keep a fine dispersion state in a state of small-sized particles, and uniformly disperses in a state where remarkable segregation is suppressed. Thereby, the vinylidene chloride-based resin composition exhibits excellent thermal stability, and exhibits high transparency, particularly high transparency after heat treatment such as boil or retort. Herein, if the ratio of the particles (A) which are solid at room temperature and have a large particle diameter having a projected area of 1000 $\mu m^2$ or more and 3000 $\mu m^2$ or less is more than 20%, the transparency of the molded product, particularly the transparency after the heat treatment such as boil or retort are deteriorated. On the other hand, 40% or more of the particles (A) which are solid at room temperature and have a small particle diameter having a projected area of 10 $\mu m^2$ or more and less than 100 $\mu m^2$ exist. This produces results such as good thermal stability during melt-molding processing and the suppression of the outflow of a foreign material, to enable stable production (continuous molding and continuous film-forming).

In this specification, the distribution state of the above-mentioned particles (A) which are solid at room temperature is measured by observing the area of 0.4 cm$^2$ of the molded film with a transmission optical microscope (200 times). Herein, first, the particles (A) which are solid at room temperature and have a projected area of 10 $\mu m^2$ or more and 3000 $\mu m^2$ or less are sampled. The sampled particles (A) are classified into three kinds of a small particle diameter (a projected area of 10 $\mu m^2$ or more and less than 100 $\mu m^2$), a medium particle diameter (a projected area of 100 $\mu m^2$ or more and less than 1000 $\mu m^2$), and a large particle diameter (a projected area of 1000 $\mu m^2$ or more and 3000 $\mu m^2$ or less). The projected areas are integrated for every classification. The total projected area of the particles (A) which are solid at room temperature and have a projected area of 10 $\mu m^2$ or more and 3000 $\mu m^2$ or less is integrated. The proportion (%) of the integrated value of the projected areas of the small particle diameter to the total projected area, and the proportion (%) of the integrated value of the projected areas of the large particle diameter to the total projected area are obtained.

The vinylidene chloride-based resin composition of the present embodiment can be obtained by mixing the particles (A) which are solid at room temperature and the plasticizer (B) which is liquid at room temperature with the vinylidene chloride-based copolymer.

A method for polymerizing the vinylidene chloride-based copolymer is not particularly limited. For example, known techniques such as suspension polymerization methods, emulsion polymerization methods, and solution polymerization methods can be employed. Among them, suspension polymerization methods are preferable. Examples of suspension polymerization methods include a direct suspension method wherein monomers are added to water in which a suspension agent is dissolved, and a suspension method described in Japanese Patent Laid-Open No. 62-280207. In this suspension method, water in which a suspension agent is dissolved is added to monomers to obtain a dispersion with monomers as a discontinuous phase and water as a continuous phase via a dispersion state with a monomer phase as a continuous phase and water as a discontinuous phase.

Examples of an oil-soluble initiator which can be used when the vinylidene chloride-based copolymer is manufactured by suspension polymerization include organic peroxides (for example, lauroyl peroxide, benzoyl peroxide, tert-butylperoxy-2-ethyl hexanoate, tert-butylperoxyisobutyrate, tert-butylperoxypivalate, tert-butylperoxyneodecanoate, and diisopropyl peroxydicarbonate), and azobis compounds (for example, azobisisobutylnitrile).

Examples of the suspension agent which can be used when the vinylidene chloride-based copolymer is manufactured by suspension polymerization include cellulose derivatives such as methyl cellulose, ethyl cellulose, and hydroxypropylmethyl cellulose, and partial saponification products of polyvinyl alcohol or polyvinyl acetate.

Examples of a water-soluble initiator which can be used when the vinylidene chloride-based copolymer is manufactured by emulsion polymerization include inorganic peroxides (for example, sodium persulfate, potassium persulfate, and ammonium persulfate) and organic peroxides (for example, a redox system of tert-butyl hydroperoxide and formaldehyde sodiumsulfoxide).

Examples of an emulsifier which can be used when the vinylidene chloride-based copolymer is manufactured by emulsion polymerization include anionic surfactants (for example, sodium alkylsulfonate and sodium alkylbenzene sulfonate) and nonionic surfactants (for example, polyoxyethylene alkyl phenyl ether).

When the vinylidene chloride-based copolymer is manufactured, chain transfer agents such as trichloroethylene, dodecylmercaptan, octylmercaptan, thioglycolic acid, and thioglycolic acid-2-ethylhexyl may be added during polymerization.

A polymerization temperature when the vinylidene chloride-based copolymer is manufactured is not particularly limited. Generally, the polymerization temperature is preferably 20°C to 100°C, and more preferably 40°C to 90°C. After the polymerization of the vinylidene chloride-based copolymer, known aftertreatments such as filtration, water cleaning, and drying can be performed if needed. For example, when an emulsified product is obtained by emulsion polymerization, a powdery or granular vinylidene chloride-based copolymer can be obtained by performing aftertreatment after salting-out using aluminium sulfate, calcium chloride or the like.

The method for mixing the particles (A) which are solid at room temperature and the plasticizer (B) which is liquid at room temperature with the vinylidene chloride-based copolymer is not particularly limited. Desirable examples of the addition method include a method for previously mixing the particles (A) which are solid at room temperature in the presence of the plasticizer (B) which is liquid at room temperature to prepare a paste-like additive, and mixing the paste-like additive with the vinylidene chloride-based copolymer. When or after the paste-like additive is mixed with the vinylidene chloride-based copolymer, the particles (A) which are solid at room temperature and/or the plasticizer (B) which is liquid at room temperature may be further mixed if needed. When the particles (A) which are solid at room temperature and the plasticizer (B) which is liquid at room temperature are mixed and ground, known mixers and grinders, for example, a butterfly mixer, a ribbon blender, a high speed mixer, a roll mill, and a bead mill can be used.

When the above-mentioned paste-like additive is prepared, the plasticizer (B) which is liquid at room temperature preferably has a viscosity of 2.5 Pa·s or more and 6 Pa·s or less, as measured at 25°C by an E type viscometer. The viscosity of the plasticizer (B) which is liquid at room temperature is set to 2.5 Pa·s or more, and thereby the aggregation and reaggregation of the particles (A) which are solid at room temperature in the paste-like additive can be suppressed in both the case where the content of the particles (A) which are solid at room temperature and constitute the paste-like additive is small and the case where the above content is large, and uniform fine dispersion can be realized. In addition, the quality (barrier property or the like) of the molded product obtained by melt-molding can be improved. On the other hand, the viscosity of the plasticizer (B) which is liquid at room temperature is set to 6 Pa·s or less, and thereby the viscosity of the prepared paste-like additive is easily controlled to the moderate range. Therefore, the segregation of the particles (A) which are solid at room temperature can be suppressed, and the flowability when the paste-like additive is added to the vinylidene chloride-based copolymer can be assured. As a result, handling property and working property are improved.

In the above-mentioned paste-like additive, the content ratio of the particles (A) which are solid at room temperature is not particularly limited. The content ratio is preferably 30% by weight or more and 60% by weight or less, and more preferably 30% by weight or more and 50% by weight or less. The content ratio of the particles (A) which are solid at room temperature is set to 30% by weight or more, and thereby the amount used of the plasticizer (B) which is liquid at room temperature can be relatively suppressed, and the quality (barrier property or the like) of the molded product after melt-molding can be improved. Furthermore, also when the paste-like additive is left at rest for a long period of time, the mixed and ground particles (A) cannot precipitate easily in the paste-like additive, which easily keeps a uniform dispersion state. On the other hand, the content ratio of the particles (A) which are solid at room temperature is set to 60% by weight or less, and thereby the reaggregation of the particles (A) which are solid at room temperature in the paste-like additive can be suppressed, which easily keeps a fine dispersion state. Because the viscosity of the paste-like additive is easily controlled to the moderate range, the segregation of the particles (A) which are solid at room temperature can be suppressed, and the flowability when the paste-like additive is mixed with the vinylidene chloride-based copolymer can be assured. As a result, handling property and working property are improved.

When the above-mentioned paste-like additive is mixed with the vinylidene chloride-based copolymer, for example, high speed mixers such as a Henschel mixer, and mixers such as a ribbon blender and a turn blender can be used.

The timing of mixing optional components other than the particles (A) which are solid at room temperature and the plasticizer (B) which is liquid at room temperature, for example, the above-mentioned other resins and various additives is not particularly limited. That is, the timing may be any timing of a monomer state before the polymerization of the vinylidene chloride-based copolymer, a slurry state after the polymerization of the vinylidene chloride-based copolymer, a drying step after the polymerization of the vinylidene chloride-based copolymer, after drying the vinylidene chloride-based copolymer, and after adding the particles (A) which are solid at room temperature and the plasticizer (B) which is liquid at room temperature.

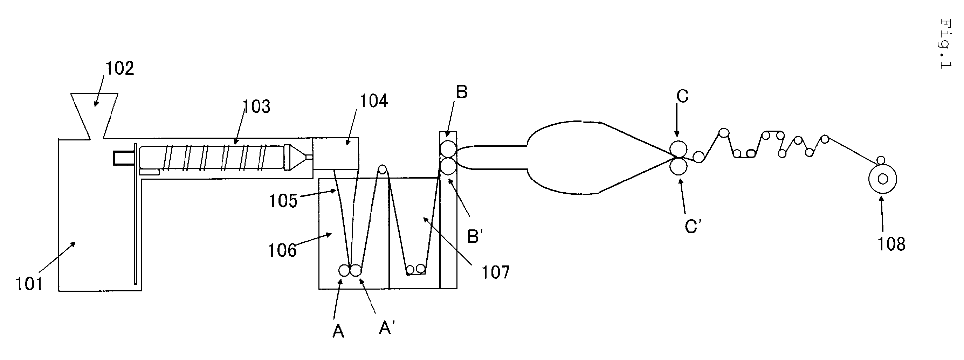

Figure 1 is a schematic view showing an example of a manufacturing apparatus for melt-molding (extrusion molding and extrusion film-forming) the vinylidene chloride-based resin composition of the present embodiment into vinylidene chloride-based resin molded products.

The vinylidene chloride-based resin composition supplied from a hopper part 102 of an extruder 101 is advanced by a screw 103, heated, kneaded, and melted. The vinylidene chloride-based resin composition is extruded from a slit part of an annular die 104 mounted on the tip of the extruder 101 to obtain a cylindrical parison 105. The parison is rapidly cooled with cold water of a cooling tank 106, and guided to pinch rolls A and A'. The cylindrical parison 105 is preheated in a warm water tank 107, and sent to pinch roll groups B, B' and C, C'. Herein, the cylindrical parison 105 is stretched and orientated fourfold in the circumferential direction and longitudinal direction of the cylinder between the pinch roll groups B, B' and C, C', by the volume of air sealed in the cylinder with a speed ratio between the pinch rolls B, B' and C, C'. The stretched and orientated cylindrical film is two-layer folded to obtain a planar shape, and wound on a winding roll 108. Then, layers of the cylindrical film is stripped off. Thus, the vinylidene chloride-based resin molded product is melt-molded. The vinylidene chloride-based resin composition may be coextruded with various synthetic resins such as polyethylene, polypropylene, polyester, polyamide, polyvinyl alcohol, and polyvinyl chloride.

A HAZE value as the transparency of the vinylidene chloride-based resin molded product is preferably less than 4% in terms of a film having a thickness of 15 $\mu$m. Above all, a HAZE value as the transparency after retort treatment is preferably less than 5% in terms of a film having a thickness of 15 $\mu$m. The HAZE value after retort treatment (in terms of a thickness of 15 $\mu$m) is less than 5%, and thereby the vinylidene chloride-based resin molded product of the present embodiment can be suitably applied to various items such as transparent medical film packaging and transparent food film packaging which require transparency.

The vinylidene chloride-based resin molded product is preferably in a form of a film or a sheet which has a thickness of 1 $\mu$m to 1000 $\mu$m and a multilayer molded product containing one or more layers corresponding such a film or a sheet. The film thickness, the sheet thickness, and the layer thickness are more preferably 5 $\mu$m to 500 $\mu$m, and still more preferably 8 $\mu$m to 200 $\mu$m. The thickness of 1 $\mu$m or more facilitates industrial production. The thickness of 1000 $\mu$m or less improves production efficiency.

The surface and/or back face of the vinylidene chloride-based resin molded product may be laminated with paper, a metal foil such as an aluminum foil, and various synthetic resin films such as polyethylene, polypropylene, polyester, polyamide, polyvinyl alcohol, and polyvinyl chloride films. Known techniques can be suitably employed as the lamination method to the vinylidene chloride-based resin molded product, and lamination method is not particularly limited. For example, a dry laminate method, a wet laminate method, and an extrusion laminate method can be applied.

Various synthetic resins such as polyethylene, polypropylene, polyester, polyamide, polyvinyl alcohol, and polyvinyl chloride may be provided on the surface, back face, and/or side face of the vinylidene chloride-based resin molded product. For example, such a complex can be obtained by coextruding the above-mentioned vinylidene chloride-based resin composition and the various synthetic resins.

Examples

Hereinafter, the present invention will be described in detail with reference to examples and comparative examples, but the present invention is not limited thereto.

Molded products in examples made of a resin composition of the present invention will be described with reference to Figure 1.

Evaluations in Examples and Comparative examples, that is, the particle size distribution, oxygen transmission rate, transparency, transparency after retort, number of pieces of carbon foreign material, extruder cleaning interval, and die portion cleaning interval of particles (A) which were solid at room temperature were obtained and evaluated according to the following methods.

(1) Evaluation of Particle Size Distribution of Particles

(A) which are Solid at Room Temperature

After a vinylidene chloride-based resin composition was melt-molded to a film having a thickness of 15 $\mu$m, an area of 0.4 cm$^2$ of the film was observed with a transmission optical microscope (OLYMPUS BX51) (200 times), and the projected area of the particles (A) which were solid at room temperature and had a projected area of 10 $\mu$m$^2$ or more and 3000 $\mu$m$^2$ or less was measured. The observed particles (A) which were solid at room temperature were classified into three kinds of a small particle diameter (a projected area of 10 $\mu$m$^2$ or more and less than 100 $\mu$m$^2$), a medium particle diameter (a projected area of 100 $\mu$m$^2$ or more and less than 1000 $\mu$m$^2$), and a large particle diameter (a projected area of 1000 $\mu$m$^2$ or more and 3000 $\mu$m$^2$ or less). The projected areas were respectively integrated. The total projected area of the particles (A) which were solid at room temperature of 10 $\mu$m$^2$ or more and 3000 $\mu$m$^2$ or less was integrated. The proportion (%) of the integrated value of the projected area of the small particle diameter to the total projected area, and the proportion (%) of the integrated value of the large particle diameter to the total projected area were obtained. The average value was obtained by repeating the same operation 50 times.

(1)-1 Large Particle Diameter (Projected Area: 1000 $\mu$m$^2$ or more and 3000 $\mu$m$^2$ or less)

```
Calculation Method; (Occupation Ratio) = (Integrated
Value of Projected Areas of Particles (A) which are Solid
at Room Temperature of 1000 μm² or more and 3000 μm² or
less)/(Integrated Value of Projected Areas of Particles
(A) which are Solid at Room Temperature of 10 μm² or more
and 3000 μm² or less (Total Projected Area))
```

(1)-2 Small Particle Diameter (Projected Area: 10 $\mu$m$^2$ or more and less than 100 $\mu$m$^2$)

$$\text{Calculation Method; (Occupation Ratio)} = \text{(Integrated Value of Projected Areas of Particles (A) which are Solid at Room Temperature of 10 } \mu m^2 \text{ or more and less than 100 } \mu m^2\text{)/(Integrated Value of Projected Areas of Particles (A) which are Solid at Room Temperature of 10 } \mu m^2 \text{ or more and 3000 } \mu m^2 \text{ or less (Total Projected Area))}$$

(2) Evaluation of Oxygen Transmission Rate

The degree of deterioration of oxygen transmission rate (O$_2$TR) due to adding a plasticizer (B) which is liquid at room temperature is evaluated. The oxygen transmission rate of the film extruded and formed without adding the particles (A) which were solid at room temperature and the plasticizer (B) which was liquid at room temperature to a vinylidene chloride-based copolymer used for each evaluation was taken as a standard value (standard O$_2$TR). The degree of deterioration (deterioration ratio) of the oxygen transmission rate of an evaluation film to the standard value was calculated by the following calculation method and evaluated (when the deterioration ratio is more than 100%, a commodity value is remarkably impaired, which is not preferable).
The oxygen transmission rate was measured in a film having a thickness of 15 $\mu$m under conditions of 23°C and 65% RH using Mocon OX-TRAN 2/20.

$$\text{Calculation Method; [Deterioration Ratio of Oxygen Transmission Rate (\%)]} = (\text{[Evaluation Film O}_2\text{TR]} - \text{[Standard O}_2\text{TR])/[Standard O}_2\text{TR]} \times 100$$

(3) Evaluation of Transparency

The transparency of a film having a thickness of 15 $\mu$m was measured by a turbidity meter (NDH 5000, manufactured by Nippon Denshoku Industries Co., Ltd.) under conditions of 23°C and 50% RH based on ASTM D-1003.

(4) Evaluation of Transparency after Retort Treatment

The transparency of a film heat-treated under the following conditions before measurement and having a thickness of 15 $\mu$m was measured under conditions of 23°C and 50% RH by a turbidity meter (NDH 5000, manufactured by Nippon Denshoku Industries Co., Ltd.) based on ASTM D-1003.
Retort Condition: The film is immersed in pressurized hot water of 120°C for 20 minutes in a state where the film is fixed to a metal frame in order not to heat-shrink, and the film is then dried at room temperature for 2 days.
The HAZE value in terms of the thickness of 15 $\mu$m is calculated using the following formula.

$$\text{HAZE (Reduced Value in terms of Thickness of 15 } \mu m) = \text{HAZE Actual Measurement Value} \times 15/\text{Thickness (}\mu m)$$

(5) Evaluation of Extruder Cleaning Interval

The test is conducted to evaluate thermal stability of a resin with respect to retention of the resin in a barrel and a screw part in the extruder. If a large amount of foreign materials flow out, it is necessary to interrupt film-forming once to replace the resin with polyethylene or the like, and to scrape out a thermally deteriorated matter in the extruder, which leads to a decrease in production efficiency. Herein, the length of a continuous extrusion time until a large amount of fine thermally deteriorated foreign materials and discoloration matters continuously flow out into the molded product was evaluated based on the following standards.

| Evaluation Criteria | Evaluation Symbol | Remarks |
| --- | --- | --- |
| 48 hours or more | ◎ | Very stable continuous production is possible |
| 24 hours or more and less than 48 hours | ○ | Stable continuous production is possible |
| 6 hours or more and less than 24 hours | Δ | Productivity is poor, but continuous production is possible |
| less than 6 hours | × | Continuous production is impossible |

(6) Evaluation of Die Portion Cleaning Interval

The test is conducted to evaluate thermal stability of the resin with respect to retention of the resin in a die. If the slipping property between a wall surface inside the die and the molten resin is poor, the retained resin is thermally deteriorated, and adheres inside the die. Because nonuniformity of the thick, streaks or the like of the molded product are generated in the worst cases, the extruder is stopped, and the die is decomposed to require cleaning (portion cleaning), which remarkably decreases production efficiency. Herein, the length of a continuous extrusion time until the die portion cleaning is required is evaluated based on the following standards.

| Evaluation Criteria | Evaluation Symbol | Remarks |
| --- | --- | --- |
| 3000 hours or more | ◎ | Very stable continuous production is possible |
| 1000 hours or more and less than 3000 hours | ○ | Stable continuous production is possible |
| 100 hours or more and less than 1000 hours | Δ | Productivity is poor, but continuous production is possible |
| less than 100 hours | × | Continuous production is impossible |

(7) Evaluation of Number of Pieces of Carbon Foreign material

If the thermally deteriorated matter (carbide) generated by the retention of the resin in the extruder suddenly peels, and flows out, a carbon foreign material is produced. In view of the quality of a product, when a large carbon foreign material (black) flows out into the molded product, it is necessary to cut the molded product once for removing a foreign material generation part and to splice the molded product, which is a problem. Herein, the thermally deteriorated matter mixed in the molded product was detected using an image sensor type foreign material inspection machine. The number of pieces of carbon foreign material of a 2 mm square or more was counted in a 2000 $m^2$ film having a thickness of 15 $\mu$m, and evaluated based on the following standards.

| Evaluation Criteria | Evaluation Symbol | Remarks |
| --- | --- | --- |
| 0 point | ◎ | Very stable continuous production is possible |
| 1 point or more and less than 5 points | ○ | Stable continuous production is possible |
| 5 points or more and less than 10 points | Δ | Productivity is poor, but continuous production is possible |
| 10 points or more | × | Continuous production is impossible |

(8) Comprehensive Evaluation

Comprehensive evaluation was performed on the following standards based on the above-mentioned evaluation items (1) to (7).

| Evaluation Criteria | Evaluation Symbol | Remarks |
| --- | --- | --- |
| All the above-mentioned seven items are satisfied | ○ | excellent as a commodity value |
| The item (1) is satisfied, but the other items are not satisfied | Δ | excellent dispersion and no commodity value |
| The evaluation item (1) is not satisfied | × | no commodity value |

[Example 1]

Into a reactor having an inner surface having a glass lining and equipped with a stirrer, 120 parts of deionized water having 0.20 part of hydroxypropylmethyl cellulose dissolved therein is charged. After stirring is started, the system is purged with nitrogen at 30°C. A mixture of 95 parts of a vinylidene chloride monomer (VDC), 5 parts of a methyl acrylate monomer (MA), and 1.0 part of t-butylperoxy-2-ethyl hexanoate is charged into the reactor. The temperature of the reactor is raised to 80°C to start the polymerization. A slurry with reduced temperature is taken out after 8 hours. Water was separated from the obtained slurry with a centrifugal dehydrator, and the slurry was then dried in a hot air drier of 80°C for 24 hours to obtain a vinylidene chloride-methyl acrylate copolymer in the form of a powder. The yield of the copolymer was 99%; the weight average molecular weight of the copolymer was 80,000; and the final copolymer composition was VDC/MA = 95.3/4.7% by weight.

Next, 50% by weight of magnesium oxide (MgO) and 50% by weight of epoxidized soybean oil (ESO) were mixed to obtain a paste-like additive. To the above-mentioned vinylidene chloride-methyl acrylate copolymer, 0.10% by weight of the paste-like additive and 0.15% by weight of epoxidized soybean oil were added and mixed. Thus, blending was carried out so that a vinylidene chloride-based resin composition finally contains 0.05% by weight of magnesium oxide and 0.20% by weight of epoxidized soybean oil. The vinylidene chloride-based resin composition was subjected to extrusion film-forming by an inflation method shown in Figure 1 to obtain a film (vinylidene chloride-based resin molded product) having a thickness of 15 $\mu$m.

[Example 2]

A vinylidene chloride-based resin composition and a film having a thickness of 15 $\mu$m (vinylidene chloride-based resin molded product) of Example 2 were obtained in the same manner as in Example 1 except that 50% by weight of magnesium oxide (MgO) and 50% by weight of epoxidized soybean oil (ESO) were previously mixed; 0.20% by weight of the obtained paste-like additive and 0.10% by weight of epoxidized soybean oil were added to the vinylidene chloride-methyl acrylate copolymer described in Example 1 and mixed; and thus, the total amount of magnesium oxide and the total amount of epoxidized soybean oil were finally set to 0.10% by weight and 0.20% by weight, respectively.

[Example 3]

A vinylidene chloride-based resin composition and a film having a thickness of 15 $\mu$m (vinylidene chloride-based resin molded product) of Example 3 were obtained in the same manner as in Example 1 except that 30% by weight of magnesium oxide (MgO) and 70% by weight of epoxidized soybean oil (ESO) were previously mixed; 0.33% by weight of the obtained paste-like additive and 0.77% by weight of epoxidized soybean oil were added to the vinylidene chloride-methyl acrylate copolymer described in Example 1 and mixed; and thus, the total amount of magnesium oxide and the total amount of epoxidized soybean oil were finally set to 0.10% by weight and 1.00% by weight, respectively.

[Example 4]

A vinylidene chloride-based resin composition and a film having a thickness of 15 $\mu$m (vinylidene chloride-based resin molded product) of Example 4 were obtained in the same manner as in Example 1 except that 60% by weight of magnesium oxide (MgO) and 40% by weight of epoxidized soybean oil (ESO) were mixed; 0.33% by weight of the obtained paste-like additive and 0.07% by weight of epoxidized soybean oil were added to the vinylidene chloride-methyl acrylate copolymer described in Example 1 and mixed; and thus, both of the amount of magnesium oxide and the amount of epoxidized soybean oil were finally set to 0.20% by weight.

[Example 5]

A vinylidene chloride-based resin composition and a film having a thickness of 15 $\mu$m (vinylidene chloride-based resin molded product) of Example 5 were obtained in the same manner as in Example 1 except that 50% by weight of magnesium oxide (MgO) and 50% by weight of epoxidized soybean oil (ESO) were previously mixed; 1.20% by weight of the obtained paste-like additive was added to the vinylidene chloride-methyl acrylate copolymer described in Example 1 and mixed; and thus, both of the total amount of magnesium oxide and the total amount of epoxidized soybean oil were finally set to 0.60% by weight.

[Example 6]

A vinylidene chloride-based resin composition and a film having a thickness of 15 $\mu$m (vinylidene chloride-

based resin molded product) of Example 6 were obtained in the same manner as in Example 1 except that 2.83% by weight of a paste-like additive obtained by previously mixing 30% by weight of magnesium oxide (MgO) and 70% by weight of epoxidized soybean oil (ESO) and 0.02% by weight of epoxidized soybean oil were added to the vinylidene chloride-methyl acrylate copolymer described in Example 1 and mixed; and thus, the total amount of magnesium oxide and the total amount of epoxidized soybean oil were finally set to 0.85% by weight and 2.00% by weight, respectively.

[Example 7]

A vinylidene chloride-based resin composition and a film having a thickness of 15 $\mu$m (vinylidene chloride-based resin molded product) of Example 7 were obtained in the same manner as in Example 1 except that 30% by weight of magnesium oxide (MgO) and 70% by weight of epoxidized linseed oil (ELO) were previously mixed to produce a paste-like additive; 2.83% by weight of the paste-like additive was added to the vinylidene chloride-methyl acrylate copolymer described in Example 1 and mixed; and thus, the total amount of magnesium oxide and the total amount of epoxidized linseed oil were finally set to 0.85% by weight and 2.00% by weight, respectively.

[Example 8]

A vinylidene chloride-based resin composition and a film having a thickness of 15 $\mu$m (vinylidene chloride-based resin molded product) of Example 8 were obtained in the same manner as in Example 1 except that 2.00% by weight of a paste-like additive obtained by previously mixing 50% by weight of magnesium oxide (MgO) and 50% by weight of epoxidized soybean oil (ESO) and 1.00% by weight of epoxidized soybean oil were added to the vinylidene chloride-methyl acrylate copolymer described in Example 1 and mixed; and thus, the total amount of magnesium oxide and the total amount of epoxidized soybean oil were finally set to 1.0% by weight and 2.00% by weight, respectively.

[Example 9]

A vinylidene chloride-based resin composition and a film having a thickness of 15 $\mu$m (vinylidene chloride-based resin molded product) of Example 9 were obtained in the same manner as in Example 1 except that 2.83% by weight of a paste-like additive obtained by previously mixing 30% by weight of magnesium hydroxide (Mg(OH)$_2$) and 70% by weight of epoxidized soybean oil (ESO) was added to the vinylidene chloride-methyl acrylate copolymer described in Example 1 and mixed; and thus, the total amount of magnesium hydroxide and the total amount of epoxidized soybean oil were finally set to 0.85% by weight and 2.00% by weight, respectively.

[Example 10]

A vinylidene chloride-based resin composition and a film having a thickness of 15 $\mu$m (vinylidene chloride-based resin molded product) of Example 10 were obtained in the same manner as in Example 1 except that 2.83% by weight of a paste-like additive obtained by previously mixing 30% by weight of calcium oxide (CaO) and 70% by weight of epoxidized soybean oil (ESO) was added to the vinylidene chloride-methyl acrylate copolymer described in Example 1 and mixed; and thus, the total amount of calcium oxide and the total amount of epoxidized soybean oil were finally set to 0.85% by weight and 2.00% by weight, respectively.

[Example 11]

A vinylidene chloride-based resin composition and a film having a thickness of 15 $\mu$m (vinylidene chloride-based resin molded product) of Example 11 were obtained in the same manner as in Example 1 except that 2.83% by weight of a paste-like additive obtained by previously mixing 30% by weight of calcium hydroxide (Ca(OH)$_2$) and 70% by weight of epoxidized soybean oil (ESO) was added to the vinylidene chloride-methyl acrylate copolymer described in Example 1 and mixed; and thus, the total amount of calcium hydroxide and the total amount of epoxidized soybean oil were finally set to 0.85% by weight and 2.00% by weight, respectively.

[Example 12]

A vinylidene chloride-based resin composition and a film having a thickness of 15 $\mu$m (vinylidene chloride-based resin molded product) of Example 12 were obtained in the same manner as in Example 1 except that 2.83% by weight of a paste-like additive obtained by previously mixing 30% by weight of aluminium oxide (Al$_2$O$_3$) and 70% by weight of epoxidized soybean oil (ESO) was added to the vinylidene chloride-methyl acrylate copolymer described in Example 1 and mixed; and thus, the total amount of aluminium oxide and the total amount of epoxidized soybean oil were finally set to 0.85% by weight and 2.00% by weight, respectively.

[Example 13]

A vinylidene chloride-based resin composition and a film having a thickness of 15 $\mu$m (vinylidene chloride-based resin molded product) of Example 13 were obtained in the same manner as in Example 1 except that 2.83% by weight of a paste-like additive obtained by previously mixing 30% by weight of aluminium hydroxide (Al(OH)$_3$) and 70% by weight of epoxidized soybean oil (ESO) was added to the vinylidene chloride-methyl acrylate copolymer described in Example 1 and mixed; and thus, the total amount of aluminium hydroxide and the total amount of epoxidized soybean oil were finally set to 0.85% by weight and 2.00% by weight, respectively.

[Example 14]

A vinylidene chloride-based resin composition and a film having a thickness of 15 $\mu$m (vinylidene chloride-based resin molded product) of Example 14 were obtained in the same manner as in Example 1 except that 2.83% by weight of a paste-like additive obtained by previously mixing 30% by weight of hydrotalcite (Mg$_6$Al$_2$(OH)$_{16}$CO$_3\cdot$4H$_2$O) and 70% by weight of epoxidized soybean oil (ESO) was added to the vinylidene chloride-methyl acrylate copolymer described in Example 1 and mixed; and thus, the total amount of hydrotalcite and the total amount of epoxidized soybean oil were finally set to 0.85% by weight and 2.00% by weight, respectively.

[Example 15]

Into a reactor having an inner surface having a glass lining and equipped with a stirrer, 120 parts of deionized water having 0.20 part of hydroxypropylmethyl cellulose dissolved therein is charged. After stirring is started, the system is purged with nitrogen at 30°C, and a mixture of 82 parts of a vinylidene chloride monomer (VDC), 18 parts of a vinyl chloride monomer (VC), and 0.1 part of diisopropyl peroxydicarbonate is charged into the reactor. The temperature of the reactor is raised to 45°C to start the polymerization. A slurry with reduced temperature is taken out after 60 hours. Water was separated from the obtained slurry with a centrifugal dehydrator, and the slurry was then dried in a hot air drier of 80°C for 24 hours to obtain a vinylidene chloride-vinyl chloride copolymer in the form of a powder. The yield of the copolymer was 90%; the weight average molecular weight of the copolymer was 120,000; and the final copolymer composition was VDC/VC = 91/9% by weight.
Next, 30% by weight of magnesium oxide (MgO) and 70% by weight of epoxidized soybean oil (ESO) were previously mixed to obtain a paste-like additive. To the above-mentioned vinylidene chloride-vinyl chloride copolymer, 2.83% by weight of the paste-like additive was added and mixed. A vinylidene chloride-based resin composition and a film having a thickness of 15 $\mu$m (vinylidene chloride-based resin molded product) of Example 15 were obtained in the same manner as in Example 1 except that thus, the total amount of magnesium oxide and the total amount of epoxidized soybean oil were finally set to 0.85% by weight and 2.00% by weight, respectively.

[Comparative Example 1]

A vinylidene chloride-based resin composition and a film having a thickness of 15 $\mu$m (vinylidene chloride-based resin molded product) of Comparative Example 1 were obtained in the same manner as in Example 1 except that 4.25% by weight of a paste-like additive obtained by previously mixing 20% by weight of magnesium oxide (MgO) and 80% by weight of epoxidized soybean oil (ESO) was added to the vinylidene chloride-methyl acrylate copolymer described in Example 1 and mixed; and thus, the total amount of magnesium oxide and the total amount of epoxidized soybean oil were finally set to 0.85% by weight and 3.40% by weight, respectively.

[Comparative Example 2]

A vinylidene chloride-based resin composition and a film having a thickness of 15 $\mu$m (vinylidene chloride-based resin molded product) of Comparative Example 2 were obtained in the same manner as in Example 1 except that 1.21% by weight of a paste-like additive obtained by previously mixing 70% by weight of magnesium oxide (MgO) and 30% by weight of epoxidized soybean oil (ESO), and 1.64% by weight of epoxidized soybean oil were added to the vinylidene chloride-methyl acrylate copolymer described in Example 1 and mixed; and thus, the total amount of magnesium oxide and the total amount of epoxidized soybean oil were finally set to 0.85% by weight and 2.00% by weight, respectively.

[Comparative Example 3]

A vinylidene chloride-based resin composition and a film having a thickness of 15 $\mu$m (vinylidene chloride-based resin molded product) of Comparative Example 3 were obtained in the same manner as in Example 1 except that 60% by weight of magnesium oxide (MgO) and 40% by weight of acetyltributyl citrate (ATBC) were previously mixed to obtain a paste-like additive; 0.33% by weight of the paste-like additive and 0.07% by weight of acetyltributyl citrate were added to the vinylidene chloride-methyl acrylate copolymer described in Example 1 and mixed; and thus, both of the total amount of magnesium oxide and the total amount of acetyltributyl citrate were finally set to 0.20% by weight.

[Comparative Example 4]

A vinylidene chloride-based resin composition and a film having a thickness of 15 $\mu$m (vinylidene chloride-based resin molded product) of Comparative Example 4 were obtained in the same manner as in Example 1 except that 2.00% by weight of epoxidized soybean oil (ESO) was previously added/mixed to/with the vinylidene chloride-methyl acrylate copolymer described in Example 1, and 0.85% by weight of magnesium oxide (MgO) described in Example 1 was then added in a powder state to the mixture.

[Comparative Example 5]

A vinylidene chloride-based resin composition and a film having a thickness of 15 $\mu$m (vinylidene chloride-based resin molded product) of Comparative Example 5 were obtained in the same manner as in Example 1 except that 2.00% by weight of epoxidized soybean oil (ESO) was previously added to the vinylidene chloride-methyl acrylate copolymer described in Example 1 and mixed, and 0.85% by weight of magnesium hydroxide (Mg(OH)$_2$) described in Example 9 was then added in a powder state to the mixture.

[Comparative Example 6]

A vinylidene chloride-based resin composition and a film having a thickness of 15 $\mu$m (vinylidene chloride-based resin molded product) of Comparative Example 6 were obtained in the same manner as in Example 1 except that 2.00% by weight of epoxidized soybean oil (ESO) was previously added to the vinylidene chloride-methyl acrylate copolymer described in Example 1 and mixed, and 0.85% by weight of calcium oxide (CaO) described in Example 10 was then added in a powder state to the mixture.

[Comparative Example 7]

A vinylidene chloride-based resin composition and a film having a thickness of 15 $\mu$m (vinylidene chloride-based resin molded product) of Comparative Example 7 were obtained in the same manner as in Example 1 except that 2.00% by weight of epoxidized soybean oil (ESO) was previously added to the vinylidene chloride-methyl acrylate copolymer described in Example 1 and mixed, and 0.85% by weight of calcium hydroxide (Ca(OH)$_2$) described in Example 11 was then added in a powder state to the mixture.

[Comparative Example 8]

A vinylidene chloride-based resin composition and a film having a thickness of 15 $\mu$m (vinylidene chloride-based resin molded product) of Comparative Example 8 were obtained in the same manner as in Example 1 except that 2.00% by weight of epoxidized soybean oil (ESO) was previously added to the vinylidene chloride-methyl acrylate copolymer described in Example 1 and mixed, and 0.85% by weight of aluminium oxide (Al$_2$O$_3$) described in Example 12 was then added in a powder state to the mixture.

[Comparative Example 9]

A vinylidene chloride-based resin composition and a film having a thickness of 15 $\mu$m (vinylidene chloride-based resin molded product) of Comparative Example 9 were obtained in the same manner as in Example 1 except that 2.00% by weight of epoxidized soybean oil (ESO) was previously added to the vinylidene chloride-methyl acrylate copolymer described in Example 1 and mixed, and 0.85% by weight of aluminium hydroxide (Al(OH)$_3$) described in Example 13 was then added in a powder state to the mixture.

[Comparative Example 10]

A vinylidene chloride-based resin composition and a film having a thickness of 15 μm (vinylidene chloride-based resin molded product) of Comparative Example 10 were obtained in the same manner as in Example 1 except that 2.00% by weight of epoxidized soybean oil (ESO) was previously added to the vinylidene chloride-methyl acrylate copolymer described in Example 1 and mixed, and 0.85% by weight of hydrotalcite ($Mg_6Al_2(OH)_{16}CO_3 \cdot 4H_2O$) described in Example 14 was then added in a powder state to the mixture.

[Comparative Example 11]

A vinylidene chloride-based resin composition and a film having a thickness of 15 μm (vinylidene chloride-based resin molded product) of Comparative Example 11 were obtained in the same manner as in Example 1 except that 2.00% by weight of epoxidized soybean oil (ESO) was previously added to the vinylidene chloride-vinyl chloride copolymer described in Example 15 and mixed, and 0.85% by weight of magnesium oxide (MgO) was then added in a powder state to the mixture.

The physical properties and performance evaluations of the vinylidene chloride-based resin compositions and vinylidene chloride-based resin molded products of Examples 1 to 15 and Comparative Examples 1 to 11 are shown in Table 1.

[Table 1]

| | No. | Resin (C) Vinylidene chloride-based copolymer | Magnesium oxide | Magnesium hydroxide | Calcium oxide | Calcium hydroxide | Aluminium oxide | Aluminium hydroxide | Hydrotalcite | Epoxidized soybean oil | Epoxidized linseed oil | ATBC | Paste concentration (A/[(A)+(B)])×100 (% by weight) | Total content of liquid-like plasticizer (B) (% by weight) | Viscosity of liquid-like plasticizer (B) (Pa·s, 25°C) | Addition method of particles (A) | Small particle diameter Occupation ratio (%) | Large particle diameter Occupation ratio (%) | Deterioration ratio of oxygen transmission rate (%) | Transparency (%) Nontreatment | Transparency (%) After retort treatment | Extruder cleaning interval | Die portion cleaning interval | Number of pieces of carbon foreign material | Comprehensive evaluation |
|---|---|---|---|---|---|---|---|---|---|---|---|---|---|---|---|---|---|---|---|---|---|---|---|---|---|
| Examples | 1 | VDC/MA | 0.05 | - | - | - | - | - | - | 0.05 | - | - | 50 | 0.20 | 3.5 | Paste-like additive | 45 | 15 | 5 | 1 | 2 | △ | △ | △ | △ |
| | 2 | | 0.10 | - | - | - | - | - | - | 0.10 | - | - | 50 | 0.20 | 3.5 | | 45 | 15 | 10 | 1 | 2 | ○ | ○ | ○ | ○ |
| | 3 | | 0.10 | - | - | - | - | - | - | 0.23 | - | - | 30 | 1.00 | 3.5 | | 50 | 10 | 40 | 1 | 2 | ○ | ○ | ○ | ○ |
| | 4 | | 0.20 | - | - | - | - | - | - | 0.13 | - | - | 60 | 0.20 | 3.5 | | 50 | 10 | 10 | 2 | 3 | ○ | ○ | ◎ | ○ |
| | 5 | | 0.60 | - | - | - | - | - | - | 0.60 | - | - | 50 | 0.60 | 3.5 | | 45 | 15 | 25 | 3 | 3 | ◎ | ◎ | ◎ | ○ |
| | 6 | | 0.85 | - | - | - | - | - | - | 1.98 | - | - | 30 | 2.00 | 3.5 | | 50 | 10 | 80 | 3 | 4 | ◎ | ◎ | ◎ | ○ |
| | 7 | | 0.85 | - | - | - | - | - | - | - | 1.98 | - | 30 | 2.00 | 3.0 | | 45 | 15 | 100 | 3 | 4 | ◎ | ◎ | ◎ | ○ |
| | 8 | | 1.00 | - | - | - | - | - | - | 1.00 | - | - | 50 | 2.00 | 3.5 | | 45 | 15 | 80 | 5 | 7 | ○ | ○ | ○ | △ |
| | 9 | | - | 0.85 | - | - | - | - | - | 1.98 | - | - | 30 | 2.00 | 3.5 | | 45 | 15 | 80 | 3 | 4 | ○ | ○ | ○ | ○ |
| | 10 | | - | - | 0.85 | - | - | - | - | 1.98 | - | - | 30 | 2.00 | 3.5 | | 45 | 15 | 80 | 3 | 4 | ○ | ○ | ○ | ○ |
| | 11 | | - | - | - | 0.85 | - | - | - | 1.98 | - | - | 30 | 2.00 | 3.5 | | 45 | 15 | 80 | 3 | 4 | ○ | ○ | ○ | ○ |
| | 12 | | - | - | - | - | 0.85 | - | - | 1.98 | - | - | 30 | 2.00 | 3.5 | | 40 | 20 | 80 | 3 | 4 | ○ | ○ | ○ | ○ |
| | 13 | | - | - | - | - | - | 0.85 | - | 1.98 | - | - | 30 | 2.00 | 3.5 | | 43 | 19 | 80 | 3 | 4 | ○ | ○ | ○ | ○ |
| | 14 | | - | - | - | - | - | - | 0.85 | 1.98 | - | - | 30 | 2.00 | 3.5 | | 40 | 19 | 80 | 4 | 5 | ○ | ○ | ○ | ○ |
| | 15 | VDC/VC | 0.85 | - | - | - | - | - | - | 1.98 | - | - | 30 | 2.00 | 3.5 | | 50 | 10 | 80 | 3 | 4 | ◎ | ◎ | ◎ | ○ |
| Comparative Examples | 1 | VDC/MA | 0.85 | - | - | - | - | - | - | 3.40 | - | - | 20 | 3.40 | 3.5 | Solid | 30 | 40 | 140 | 8 | 15 | △ | △ | △ | × |
| | 2 | | 0.85 | - | - | - | - | - | - | 0.36 | - | - | 70 | 0.36 | 3.5 | | 30 | 40 | 80 | 8 | 15 | △ | △ | △ | × |
| | 3 | | 0.20 | - | - | - | - | - | - | - | - | 0.13 | 60 | 0.20 | 0.5 | | 30 | 40 | 15 | 15 | 25 | × | × | × | × |
| | 4 | | 0.85 | - | - | - | - | - | - | - | - | - | - | 2.00 | 3.5 | | 30 | 40 | 80 | 13 | 25 | △ | △ | △ | × |
| | 5 | | - | 0.85 | - | - | - | - | - | - | - | - | - | 2.00 | 3.5 | | 30 | 38 | 80 | 10 | 20 | △ | △ | △ | × |
| | 6 | | - | - | 0.85 | - | - | - | - | - | - | - | - | 2.00 | 3.5 | | 38 | 30 | 80 | 14 | 28 | △ | △ | △ | × |
| | 7 | | - | - | - | 0.85 | - | - | - | - | - | - | - | 2.00 | 3.5 | | 35 | 35 | 80 | 15 | 30 | △ | △ | △ | × |
| | 8 | | - | - | - | - | 0.85 | - | - | - | - | - | - | 2.00 | 3.5 | | 13 | 50 | 80 | 20 | 28 | △ | △ | × | × |
| | 9 | | - | - | - | - | - | 0.85 | - | - | - | - | - | 2.00 | 3.5 | | 18 | 45 | 80 | 18 | 26 | △ | △ | × | × |
| | 10 | | - | - | - | - | - | - | 0.85 | - | - | - | - | 2.00 | 3.5 | | 20 | 40 | 80 | 20 | 25 | △ | △ | △ | × |
| | 11 | VDC/VC | 0.85 | - | - | - | - | - | - | - | - | - | - | 2.00 | 3.5 | | 20 | 40 | 80 | 17 | 30 | △ | △ | △ | × |

As shown in Examples 1 to 6 and 8, the paste-like additive obtained by previously preparing 30 to 60% by weight of magnesium oxide in the presence of 40 to 70% by weight of epoxidized soybean oil was added to the vinylidene chloride-methyl acrylate copolymer, and finally, the amount of magnesium oxide was set to 0.05 to 1.00% by weight and the amount of epoxidized soybean oil was set to 0.05 to 2.00% by weight. This made it clear that a vinylidene chloride-based resin composition and a vinylidene chloride-based resin molded product can be realized, which resolve the aggregation, dispersion defect, and segregation of magnesium oxide, keep intended thermal stability during extrusion film-forming, and have commodity values having good barrier property and transparency of the molded product, particularly good transparency after retort. Above all, as shown in Examples 2 to 6, finally, the amount of magnesium oxide was set to 0.10 to 0.85% by weight and the amount of epoxidized soybean oil was set to 0.10 to 2.00% by weight. This made it clear that high performance can be attained.

As shown in Example 7, similarly to the case where epoxidized soybean oil is used, when epoxidized linseed oil is used as the plasticizer (B) which is liquid at room temperature for preparing the paste-like additive, a vinylidene chloride-based resin composition and a vinylidene chloride-based resin molded product can be realized, which have good thermal stability during extrusion and have intended commodity values having good barrier property and transparency, particularly good transparency after retort.

As shown in Examples 9 to 14, similarly to the case where magnesium oxide is used, when magnesium hydroxide, calcium oxide, calcium hydroxide, aluminium oxide, aluminium hydroxide, and hydrotalcite are used as the particles (A) which are solid at room temperature for preparing the paste-like additive, a vinylidene chloride-based resin composition and a vinylidene chloride-based resin molded product are obtained, which have good thermal stability during extrusion and satisfy intended commodity values having good barrier property and transparency, particularly good transparency after retort.

Furthermore, as shown in Example 15, similarly to the case where the vinylidene chloride-methyl acrylate copolymer is used, when the vinylidene chloride-vinyl chloride copolymer is used as the vinylidene chloride-based copolymer, a vinylidene chloride-based resin composition and a vinylidene chloride-based resin molded product are obtained, which have good thermal stability during extrusion and satisfy intended commodity values having good barrier property and transparency, particularly good transparency after retort.

On the other hand, if the content of magnesium oxide in the paste-like additive is set to 20% by weight as in Comparative Example 1, the aggregation of magnesium oxide is generated in the paste-like additive, and a number of aggregates of magnesium oxide are observed in the molded product containing the vinylidene chloride-based resin composition obtained by adding the paste-like additive to the vinylidene chloride-based copolymer and mixing, as the raw material, which cannot attain sufficient thermal stability and transparency. Furthermore, if the paste-like additive in which the content of magnesium oxide is 20% by weight is added so that the amount of magnesium oxide to be added is set to 0.85% by weight which is the same amount as that in Example 6, the amount of epoxidized soybean oil to be added is relatively increased, and the barrier property is remarkably deteriorated. Therefore, a vinylidene chloride-based resin composition and a vinylidene chloride-based resin molded product which satisfy intended commodity values are not obtained.

If the content of magnesium oxide in the paste-like additive is set to 70% by weight as in Comparative Example 2, a number of solid components are contained in the paste-like additive, which causes poor flowability of the paste itself. Therefore, the paste-like additive cannot be uniformly added and mixed to the vinylidene chloride-based copolymer. The molded product containing the vinylidene chloride-based resin composition as the raw material generates the aggregation and segregation of magnesium oxide, and the intended thermal stability and film transparency cannot be attained in spite of adding the same amount of the thermostabilizer as that in Example 6, which does not obtain a vinylidene chloride-based resin composition and a vinylidene chloride-based resin molded product which satisfy intended commodity values.

If the paste-like additive is prepared and added under the same condition as that of Example 4 using acetylated tributyl citrate (viscosity; 50 mPa·s) as the plasticizer (B) which has a low viscosity and is liquid at room temperature as in Comparative Example 3, the reaggregation of magnesium oxide in the paste-like additive is observed. Furthermore, the remarkable aggregation and segregation of magnesium oxide are generated also in the molded vinylidene chloride-based resin molded product, which cannot attain intended thermal stability and transparency. A vinylidene chloride-based resin composition and a vinylidene chloride-based resin molded product which satisfy intended commodity values are not obtained.

If epoxidized soybean oil and the particles (A) which are solid at room temperature are individually added and mixed to the vinylidene chloride-based copolymer in a liquid state and a solid state, respectively, without mixing and grinding epoxidized soybean oil and the particles (A) in advance as in Comparative Examples 4 to 11, the aggregation and segregation of the particles (A) which are solid at room temperature are remarkable, and sufficient thermal stability is not obtained in spite of adding the same amount of the thermostabilizer as those of Example 6 and Examples 9 to 15. Furthermore, a number of aggregates of and segregations of the particles (A) which exists in the vinylidene chloride-based resin molded product after melting processing, and are solid at room temperature are also observed. The deterioration of transparency, particularly of transparency after retort is remarkable, and a vinylidene chloride-based resin composition and a vinylidene chloride-based resin molded product which satisfy intended commodity values are not obtained.

Industrial Applicability

Because the vinylidene chloride-based resin composition and the vinylidene chloride-based resin molded product of the present invention have excellent thermal stability during melt-molding and have high productivity, the vinylidene chloride-based resin composition and the vinylidene chloride-based resin molded product can be widely and effectively used in the packing material application. Above all, because the vinylidene chloride-based resin composition and the vinylidene chloride-based resin molded product have excellent transparency and barrier property, the vinylidene chloride-based resin composition and the vinylidene chloride-based resin molded product can be suitably utilized in the packing material application requiring transparency such as for a medicinal product and a food. Because the vinylidene chloride-based resin composition can be simply manufactured at a low cost according to the manufacturing method of the vinylidene chloride-based resin composition of the present invention, productivity and economical efficiency can be improved.

Reference Signs List

101; extruder
102; hopper part
103; screw
104; annular die
105; cylindrical parison
106; cooling tank
107; warm water tank
108; winding roll
A, A', B, B', C, C'; pinch roll

**Claims**

1. A vinylidene chloride-based resin composition comprising:

   particles (A) which are solid at room temperature;
   a plasticizer (B) which is liquid at room temperature; and
   a vinylidene chloride-based copolymer,
   wherein, in an area of 0.4 cm$^2$ observed with a transmission optical microscope, a ratio of the particles (A) which have a projected area of 1000 $\mu$m$^2$ or more and 3000 $\mu$m$^2$ or less to the particles (A) which have a projected area of 10 $\mu$m$^2$ or more and 3000 $\mu$m$^2$ or less is 20% or less; and a ratio of the particles (A) which have a projected area of 10 $\mu$m$^2$ or more and less than 100 $\mu$m$^2$ to the particles (A) which have a projected area of 10 $\mu$m$^2$ or more and 3000 $\mu$m$^2$ or less is 40% or more.

2. The vinylidene chloride-based resin composition according to claim 1, wherein the particles (A) are selected from oxides or hydroxides of metals or elements of the 14th group of the periodic table.

3. The vinylidene chloride-based resin composition according to claim 1 or 2, wherein the plasticizer (B) has a viscosity of 2.5 Pa·s or more and 6 Pa·s or less, as measured at 25°C with an E type viscometer.

4. The vinylidene chloride-based resin composition according to any one of claims 1 to 3, wherein a film after retort treatment has a HAZE value as transparency of less than 5% in terms of a film having a thickness of 15 $\mu$m.

5. A method for manufacturing a vinylidene chloride-based resin composition, the method comprising the step of:

   blending a paste-like additive, which is obtained by preparing particles (A) which are solid at room temperature in the presence of a plasticizer (B) which is liquid at room temperature and comprises 30% by weight or more and 60% by weight or less of the particles (A), with a vinylidene chloride-based copolymer,
   wherein, in an area of 0.4 cm$^2$ of the particles (A) observed with a transmission optical microscope, a ratio of the particles (A) which have a projected area of 1000 $\mu$m$^2$ or more and 3000 $\mu$m$^2$ or less to the particles (A) which have a projected area of 10 $\mu$m$^2$ or more and 3000 $\mu$m$^2$ or less is 20% or less; and a ratio of the particles (A) which have a projected area of 10 $\mu$m$^2$ or more and less than 100 $\mu$m$^2$ to the particles (A) which have a projected area of 10 $\mu$m$^2$ or more and 3000 $\mu$m$^2$ or less is 40% or more.

6. A vinylidene chloride-based resin molded product comprising at least one layer having a thickness of 1 $\mu$m or more and 1000 $\mu$m or less, the layer prepared by melt-molding the vinylidene chloride-based resin composition according to any one of claims 1 to 4.

7. The vinylidene chloride-based resin composition according to claim 1, comprising:

0.10 to 0.85% by weight of particles (A) which are solid at room temperature;
0.10 to 2.00% by weight of a plasticizer (B) which is liquid at room temperature, and
a vinylidene chloride-based copolymer,
wherein the vinylidene chloride-based resin composition is obtained by mixing at least a paste-like additive, which is obtained by mixing the particles (A) which are solid at room temperature in the presence of the plasticizer (B) which is liquid at room temperature, with the vinylidene chloride-based copolymer.

Fig.1

Fig.2

Fig.3

## INTERNATIONAL SEARCH REPORT

| | International application No. |
|---|---|
| | PCT/JP2011/067137 |

**A. CLASSIFICATION OF SUBJECT MATTER**
*C08L27/08*(2006.01)i, *C08J5/00*(2006.01)i, *C08K3/00*(2006.01)i, *C08K5/00*
(2006.01)i

According to International Patent Classification (IPC) or to both national classification and IPC

**B. FIELDS SEARCHED**

Minimum documentation searched (classification system followed by classification symbols)
C08L27/08, C08J5/00, C08K3/00, C08K5/00

Documentation searched other than minimum documentation to the extent that such documents are included in the fields searched
Jitsuyo Shinan Koho          1922-1996   Jitsuyo Shinan Toroku Koho   1996-2011
Kokai Jitsuyo Shinan Koho    1971-2011   Toroku Jitsuyo Shinan Koho   1994-2011

Electronic data base consulted during the international search (name of data base and, where practicable, search terms used)
WPI

**C. DOCUMENTS CONSIDERED TO BE RELEVANT**

| Category* | Citation of document, with indication, where appropriate, of the relevant passages | Relevant to claim No. |
|---|---|---|
| X | JP 09-194512 A  (Sumitomo Osaka Cement Co., Ltd.), 29 July 1997 (29.07.1997), claims; paragraphs [0010] to [0023]; examples (Family: none) | 1-7 |
| A | JP 2003-192861 A  (Kureha Chemical Industry Co., Ltd.), 09 July 2003 (09.07.2003), entire text & CN 1428371 A | 1-7 |
| A | JP 2011-505442 A  (Solvay (S.A.)), 24 February 2011 (24.02.2011), entire text & WO 2009/065925 A1 | 1-7 |

☐ Further documents are listed in the continuation of Box C.   ☐ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 08 September, 2011 (08.09.11) | 27 September, 2011 (27.09.11) |

| Name and mailing address of the ISA/ | Authorized officer |
|---|---|
| Japanese Patent Office | |
| Facsimile No. | Telephone No. |

Form PCT/ISA/210 (second sheet) (July 2009)

**EP 2 738 217 A1**

**Patent documents cited in the description**

- JP 50038651 A
- JP 9052963 A
- WO 4500829 A
- JP 62280207 A